# FASCICULE DE BREVET EUROPEEN

(11) **EP 4 070 017 B1**
(45) Date de publication et mention de la délivrance du brevet: **11.10.2023**
(21) Numéro de dépôt: 20820494.1
(22) Date de dépôt: 19.11.2020
(51) Int. Cl.: F24H 1/00, F24H 1/10, F24H 9/20, B60H 1/22, G05D 23/19, H05B 1/02, H05K 1/18, H05B 3/50

(54) **DISPOSITIF DE CHAUFFAGE DE FLUIDE, NOTAMMENT DESTINE A UN VEHICULE**
HEIZVORRICHTUNG FÜR FLÜSSIGKEIT, INSBESONDERE FÜR EIN FAHRZEUG
HEATING DEVICE FOR FLUID, IN PARTICULAR FOR A VEHICLE

(30) Priorité: 05.12.2019 FR 1913826
(43) Date de publication de la demande: 12.10.2022
(73) Titulaire: VALEO SYSTEMES THERMIQUES, 78320 Le Mesnil Saint-Denis (FR)
(72) Inventeur: FOURNIER, Jonathan, 78320 Le Mesnil Saint-Denis (FR); DECOOL, Laurent, 78320 Le Mesnil Saint-Denis (FR); FAIVRE, Arnaud, 78320 Le Mesnil Saint-Denis (FR); KARAASLAN, Serif, 78320 Le Mesnil Saint-Denis (FR)
(74) Mandataire: Valeo Systèmes Thermiques
(86) Numéro de dépôt international: PCT/FR2020/052136
(87) Numéro de publication internationale: WO 2021/111056

(56) Documents cités:
- EP-A1- 2 104 016
- EP-A1- 2 440 005
- WO-A1-2014/154581
- WO-A1-2015/082434
- WO-A1-2018/195731
- WO-A2-2014/033115
- DE-A1- 19 625 755
- FR-A1- 3 003 809

## Description

L'invention concerne un dispositif de chauffage de fluide, notamment destiné à un véhicule, plus particulièrement pour une installation de ventilation, de chauffage et/ou de climatisation de l'habitacle du véhicule et/ou la thermo-régulation d'une batterie. Il pourra s'agir notamment d'un véhicule électrique ou hybride pouvant être autonome.

Il est connu d'assurer le chauffage de l'air destiné au traitement thermique de l'habitacle d'un véhicule par échange de chaleur entre un flux d'air et un liquide caloporteur, par le biais d'un échangeur thermique. Dans le cas des véhicules hybrides ou électriques, on connaît des dispositifs de chauffage électrique qui forment une source de calories et dans lesquels on fait circuler un courant électrique pour faire monter en température des éléments électriques chauffants mis au contact du liquide caloporteur. Il s'effectue alors un échange de calories entre les éléments chauffants et le liquide caloporteur qui chauffe à son tour avant de chauffer l'habitacle grâce à l'échangeur.

Pour commander le courant électrique servant à alimenter les éléments électriques chauffants, il est nécessaire de disposer de capteurs donnant une information sur la température du fluide.

Les documents WO 2015/082434 A1, WO2014/033115 A2, FR 3 003 809 A1 or EP 2 440 005 A1 divulguent un dispositif de chauffage selon le préambule de la revendication 1.

Les emplacements utilisés jusqu'à présent pour positionner ces capteurs ne sont pas entièrement satisfaisants.

Il convient dès lors de trouver une solution de relevé de température qui soit simple de construction, facile à positionner dans un dispositif de chauffage de fluide, et apte à donner une image fiable de la température du fluide et à interagir avec un circuit de commande des éléments électriques chauffants.

La présente invention vise à proposer une solution de relevé de température présentant au moins l'une des caractéristiques ci-dessus.

A cet effet, l'invention a pour objet un dispositif de chauffage électrique de fluide, notamment pour un véhicule automobile, comprenant un boîtier ayant une première chambre de circulation du fluide, au moins un élément électrique chauffant pour chauffer le fluide dans ladite première chambre, une carte électronique de commande d'un courant circulant dans ledit ou lesdits éléments électriques chauffants, et au moins un capteur thermique. Selon l'invention, le ou les capteurs thermiques sont positionnés au niveau de la carte électronique et reliés thermiquement à ladite première chambre par l'intermédiaire d'un drain thermique.

Le drain thermique selon l'invention permet aux capteurs d'accéder à la température de la première chambre du boîtier sans être placés directement au contact de celle-ci. En particulier, le drain thermique permet aux capteurs d'accéder à la température des éléments électriques chauffants et/ou du fluide caloporteur contenus dans ladite première chambre à partir du relevé de température d'une paroi de ladite première chambre. Il s'agit pour les éléments électriques chauffants et pour le fluide caloporteur d'un relevé de température indirect, rendu possible grâce à une correspondance ou une corrélation connues avec la température de la zone choisie de la première chambre.

En outre, le drain thermique selon l'invention peut être formé au moins en partie lors du moulage du boîtier. Ceci simplifie la fabrication de la solution de relevé de température.

L'invention peut également comprendre l'une quelconque des caractéristiques suivantes, prises individuellement ou selon toutes combinaisons techniquement possibles qui forment autant de modes de réalisation de l'invention :
- le ou les éléments électriques chauffants sont disposés dans la première chambre au contact du fluide ;
- le drain thermique est en contact avec la carte électronique ;
- le drain thermique est positionné à proximité d'une ouverture de sortie du fluide du boîtier, en particulier d'une ouverture de sortie de la première chambre ;
- la carte électronique comprend une zone principale et une zone thermiquement isolée de ladite zone principale;
- la zone isolée est définie par des fentes traversantes formées sur la carte électronique ;
- la zone isolée reçoit le ou les capteurs de température;
- la zone isolée est positionnée au voisinage du drain thermique ;
- la carte électronique est positionnée dans la deuxième chambre du boîtier ;
- la deuxième chambre est séparée de la première chambre au moyen d'une paroi de séparation;
- le drain thermique comprend une colonne ;
- la colonne est formée dans la deuxième chambre ;
- la colonne s'étend à partir de la paroi de séparation;
- la colonne est en contact avec la carte électronique ;
- la colonne supporte la carte électronique ;
- la colonne présente une forme conique ;
- la colonne présente un alésage ;
- la colonne présente une périphérie pourvue d'ailettes de rigidification;
- un élément assure la fixation de la carte électronique sur la colonne;
- l'élément de fixation et/ou la colonne assurent la mise à la masse de la carte électronique sur le boîtier ;
- l'élément de fixation comprend une tête ainsi qu'une tige ;
- la tige de l'élément de fixation passe à travers une ouverture de la carte électronique et s'étend dans l'alésage de la colonne;
- la tête de l'élément de fixation plaque la carte électronique contre la colonne ;
- l'élément de fixation est formé d'une vis ;

L'invention sera mieux comprise et d'autres détails, caractéristiques et avantages de l'invention apparaîtront à la lecture de la description suivante, faite à titre d'exemple non limitatif et en référence aux dessins annexés, dans lesquels :
- La figure 1 est une vue en coupe longitudinale d'un dispositif de chauffage selon l'invention;
- La figure 2 représente un détail de la figure 1;
- La figure 3 représente la structure schématique d'une carte électronique d'un dispositif de chauffage selon l'invention.

Il est tout d'abord à noter que sur l'ensemble des figures, les éléments similaires et/ou remplissant la même fonction sont indiqués par le même repère.

Par convention, sauf indication contraire, le qualificatif « longitudinal » s'applique à la direction dans laquelle s'étend la plus grande dimension du dispositif de chauffage électrique, le qualificatif « transversal » s'applique à une direction sensiblement perpendiculaire à la direction longitudinale, et le qualificatif « vertical » désigne la direction perpendiculaire à la fois à la direction longitudinale et à la direction transversale.

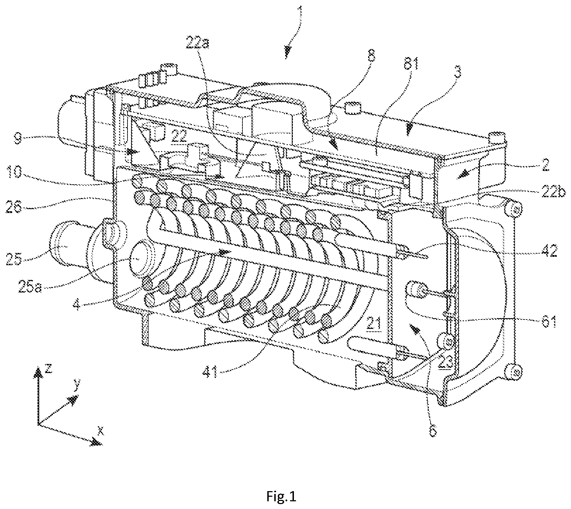

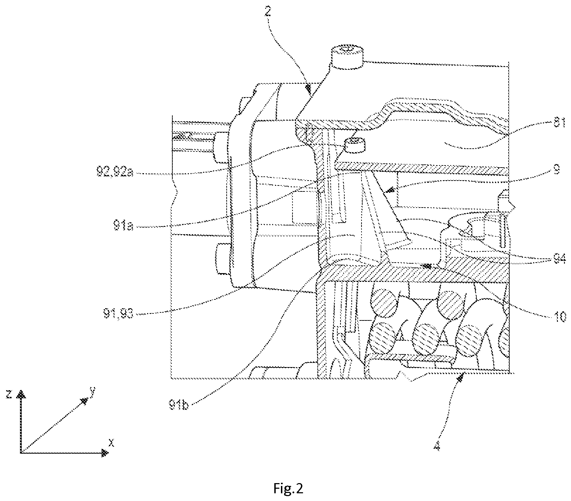

Par ailleurs, en référence aux orientations et directions définies précédemment, la direction longitudinale sera représentée par l'axe Ox, la direction transversale sera représentée par l'axe Oy, et la direction verticale sera représentée par l'axe Oz. Ces différents axes définissent ensemble un repère orthonormé Oxyz représenté aux figures 1 et 2. Dans ce repère, les qualificatifs "haut" ou "supérieur" seront représentés par le sens positif de l'axe Oz, les qualificatifs "bas" ou "inférieur" étant représentés par le sens négatif de ce même axe Oz.

Comme illustré à la figure 1, l'invention concerne un dispositif de chauffage 1. Ledit dispositif sert au chauffage d'un fluide, notamment d'un liquide caloporteur. Ledit dispositif comprend un boîtier 2 de circulation du fluide, au moins un élément chauffant 4, ici deux, et une unité de commande 8 d'un courant d'alimentation dudit ou desdits éléments chauffants.

En particulier, le boîtier 2 définit une première chambre 21 de circulation du fluide, laquelle est agencée pour recevoir le ou les éléments électriques chauffants 4 de manière à ce que le fluide en circulation dans ledit boîtier soit mis au contact dudit ou desdits éléments électriques chauffants. Le boîtier 2 définit également une deuxième chambre 22 dans laquelle est logée l'unité de commande 8 du courant circulant dans le ou les éléments électriques chauffants 4. Enfin, le boîtier définit une troisième chambre 23 qui est séparée de la première chambre 21 au moyen d'un couvercle 6.

Le boîtier 2 est formé, par exemple, par moulage d'aluminium et/ou alliage d'aluminium.

Pour assurer la circulation du fluide dans la chambre 21, le boîtier 2 comprend au moins une première tubulure d'entrée (non représentée) et au moins une deuxième tubulure 25 de sortie en communication avec ladite chambre 21. La tubulure d'entrée et la tubulure de sortie 25 sont disposées d'un même côté du boîtier 2, ici au niveau d'un fond 26 du boîtier 2.

La tubulure de sortie 25 débouche directement dans la chambre 21 à travers une première lumière 25a. La tubulure d'entrée débouche dans la chambre 21 par une deuxième lumière formée à une extrémité de ladite chambre, à l'opposé du fond 26. La tubulure d'entrée comprend un canal longeant longitudinalement la chambre 21 et débouchant dans ladite chambre.

Chaque élément électrique chauffant 4 comprend une résistance blindée 41 disposée en spirale ainsi qu'au moins un terminal de connexion 42 destiné à relier ladite résistance à une source d'alimentation en courant. Lesdits éléments électriques chauffants 4 s'étendent longitudinalement dans le boîtier 2 à travers le couvercle 6.

Pour ce faire, le couvercle 6 comprend des ouvertures 61 dans lesquelles les éléments électriques chauffants 4 sont montés de telle manière que, pour chacun desdits éléments électriques, la résistance 41 s'étende dans la première chambre 21 et les terminaux 42 s'étendent à travers le couvercle 6 et débouchent dans la troisième chambre 23. La liaison entre ledit couvercle 6 et lesdits terminaux 42 est étanche.

Par ailleurs, le couvercle 6 est monté à l'extrémité de la chambre 21 de manière étanche, et ce, par collage, vissage, emmanchement forcé ou tout autre moyen et/ou technique connus de l'homme du métier. Il est à noter que le couvercle 6 est réalisé par exemple à partir d'aluminium et ou un alliage d'aluminium.

La deuxième chambre 22 est située au-dessus de la première chambre 21, le long de celle-ci, et présente un bord supérieur obturé au moyen d'un capot supérieur 3. En outre, la deuxième chambre 22 comprend des projections verticales 22a ainsi qu'une plateforme 22b formées sur une paroi de séparation 10 entre ladite deuxième chambre et la première chambre 21.

L'unité de commande 8 comprend une carte électronique 81 positionnée au-dessus des projections verticales 22a de la deuxième chambre 22 ainsi qu'au moins un commutateur configuré pour contrôler la quantité de courant et/ou couper le courant circulant dans le ou les éléments électriques chauffants 4 en prévention d'une surchauffe du fluide et/ou dudit ou desdits éléments électriques chauffants.

Selon l'invention, le dispositif de chauffage comprend un ou des capteurs thermiques positionnés sur la carte électronique 81 et reliés thermiquement à la première chambre 21 par l'intermédiaire d'un drain thermique 9.

Comme illustré à la figure 2, le drain thermique 9 comprend une colonne 91 qui s'étend depuis la paroi de séparation 10, ainsi qu'un élément de fixation 92 qui comprend une tige 92a reliée à une tête 92b.

En particulier, le choix de la paroi de séparation 10 comme surface d'appui de la colonne 91 du drain thermique 9 est lié au fait que ladite paroi reçoit par conduction la chaleur du fluide contenu dans la première chambre 21, et présente par conséquent une température correspondante ou corrélée avec celle du fluide et/ou des éléments électriques chauffants 4.

La colonne 91 comprend un alésage défini entre un bord supérieur 91a ouvert et un bord inférieur 91b fermé et en contact avec la paroi de séparation 10. En outre, la colonne 91 comprend une périphérie 93 pourvue d'ailettes 94 de rigidification.

Les ailettes 94, ici au nombre de deux, présentent chacune suivant une direction radiale de la colonne 91 une section triangulaire de largeur décroissante entre le bord inférieur 92b et le bord supérieur 92a de ladite colonne.

Ainsi, la colonne 91 et les ailettes 94 présentent une forme générale évasée qui offre l'avantage de drainer la quasi-totalité de chaleur depuis la paroi de séparation 10 vers la carte électronique 81, la grande base de la colonne 91 et la base des ailettes 94 étant situées au contact de la paroi de séparation 10.

De façon avantageuse, la colonne 91 et les ailettes 94 forment un seul corps obtenu lors du moulage du boîtier 2.

De façon avantageuse, la colonne 91 et les ailettes 94 sont formées par l'une des projections 22a servant à positionner la carte électronique 81 au-dessus de la plateforme 22b de la deuxième chambre 22. Ceci simplifie la conception du dispositif de chauffage 1 en ce que la fonction de drain thermique peut être affectée à n'importe laquelle des projections 22a supportant la carte électronique 81.

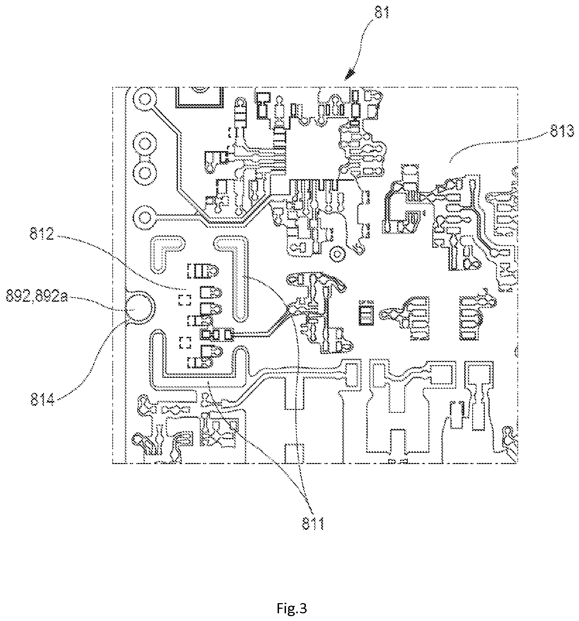

Comme illustré à la figure 3, la carte électronique 81 présente des fentes traversantes 811 qui définissent une zone 812 thermiquement isolée d'une zone principale 813 de ladite carte, ladite zone isolée recevant le ou les capteurs thermiques.

En outre, la carte électronique 81 comprend à proximité de la zone isolée 812 une ouverture 814 qui est alignée sur l'alésage de la colonne 91 afin de recevoir une tige de l'élément de fixation 92. Ladite tige est pourvue d'une tête 92a qui permet de plaquer la carte électronique 81 contre le bord supérieur 91a de la colonne 91.

Autrement dit, le drain thermique 9, par une coopération entre la colonne 91 et l'élément de fixation 92, permet de fixer la carte électronique 81 sur le boîtier 2, assurant par la même occasion la mise à la masse de ladite carte électronique sur ledit boîtier.

En outre, le drain thermique 9, à travers la colonne 91 et/ou l'élément de fixation 92, établit un contact thermique entre la paroi de séparation 10 et la carte électronique 81, et plus particulièrement entre la paroi de séparation 10 et les capteurs de température positionnés sur ladite carte électronique dans la zone isolée 812.

De façon avantageuse, l'élément de fixation 92 est formé d'une vis qui coopère avec un taraudage pratiqué au niveau de l'alésage de la colonne 91.

De façon avantageuse, le drain thermique 9 est positionné à proximité de l'ouverture 25a de sortie du fluide, une zone sujette à des températures élevées ; et la zone isolée 812 de la carte électronique 81 est positionnée verticalement en regard dudit drain.

L'unité de commande 8 comprend, par exemple, un microcontrôleur, non représenté, contrôlant le courant d'alimentation des éléments électriques chauffant, notamment en contrôlant l'état ouvert ou fermé de commutateurs servant à l'alimentation desdits éléments électriques chauffants.

Les capteurs thermiques sont, par exemple au nombre de deux ou trois et de technologies différentes pour assurer une redondance et éviter des modes de défaillance communs. L'information de température que ces capteurs génèrent est transmise au microcontrôleur pour la commande du courant et/ou la détection de franchissement de sécurité.

## Revendications

1. Dispositif de chauffage électrique de fluide, notamment pour véhicule automobile, comprenant :
- un boîtier (2) ayant une première chambre (21) de circulation du fluide,
- au moins un élément électrique chauffant (4) pour chauffer le fluide dans ladite première chambre (21),
- une carte électronique (81) de commande d'un courant circulant dans ledit ou lesdits éléments électriques chauffants (4),
- au moins un capteur thermique,
**caractérisé en ce que** ledit ou lesdits capteurs thermiques sont positionnés au niveau de la carte électronique (81) et reliés thermiquement à ladite première chambre (21) par l'intermédiaire d'un drain thermique (9).

2. Dispositif de chauffage selon la revendication précédente, dans lequel le drain thermique (9) est positionné à proximité d'une ouverture de sortie (25a) du fluide du boîtier (2).

3. Dispositif de chauffage selon l'une quelconque des revendications précédentes, dans lequel la carte électronique (81) comprend une zone principale (813) et une zone (812) thermiquement isolée de la zone principale, ladite zone isolée recevant le ou les capteurs de température.

4. Dispositif de chauffage selon la revendication précédente, dans lequel la zone isolée (812) est définie par des fentes (811) traversantes formées sur la carte électronique (81).

5. Dispositif de chauffage selon l'une quelconque des revendications précédentes, dans lequel la carte électronique (81) est disposée dans une deuxième chambre (22) du boîtier (2), ladite deuxième chambre étant séparée de la première chambre (21) au moyen d'une paroi de séparation (10).

6. Dispositif de chauffage selon la revendication précédente, dans lequel le drain thermique (9) comprend une colonne (91) formée dans la deuxième chambre (22) et s'étendant à partir de la paroi de séparation (10), ladite colonne étant en contact avec la carte électronique (81).

7. Dispositif de chauffage selon la revendication précédente, dans lequel la colonne (91) supporte la carte électronique (81).

8. Dispositif de chauffage selon l'une des revendications 6 ou 7, comprenant en outre un élément (92) assurant la fixation de la carte électronique (81) sur la colonne (91), ledit élément (92) étant monté à travers ladite carte.

9. Dispositif de chauffage selon l'une quelconque des revendications 6 à 8, dans lequel la colonne (91) et/ou l'élément de fixation (92) assurent la mise à la masse de la carte électronique (81) sur le boîtier (2).

10. Dispositif de chauffage selon l'une quelconque des revendications 6 à 9, dans lequel l'élément de fixation (92) présente une tête (92a) qui est positionnée à proximité du ou des capteurs, ainsi qu'une tige (92b) qui s'engage dans un alésage de la colonne (91).

## Patentansprüche

1. Vorrichtung zum elektrischen Erhitzen eines Fluids, insbesondere für ein Kraftfahrzeug, umfassend:
- ein Gehäuse (2) mit einer ersten Kammer (21) zur Zirkulation des Fluids,
- mindestens ein elektrisches Heizelement (4) zum Erhitzen des Fluids in der ersten Kammer (21),
- eine elektronische Karte (81) zum Steuern eines Stroms, der in dem bzw. den elektrischen Heizelement(en) (4) fließt,
- mindestens einen Wärmesensor,
**dadurch gekennzeichnet, dass** der bzw. die Wärmesensor(en) an der elektronischen Karte (81) positioniert und über eine Wärmeableitung (9) thermisch mit der ersten Kammer (21) verbunden sind.

2. Heizvorrichtung nach dem vorangehenden Anspruch, wobei die Wärmeableitung (9) in der Nähe einer Auslassöffnung (25a) des Fluids aus dem Gehäuse (2) positioniert ist.

3. Heizvorrichtung nach einem der vorangehenden Ansprüche, wobei die elektronische Karte (81) einen Hauptbereich (813) und einen thermisch vom Hauptbereich isolierten Bereich (812) umfasst, wobei der isolierte Bereich den bzw. die Temperatursensor(en) aufnimmt.

4. Heizvorrichtung nach dem vorangehenden Anspruch, wobei der isolierte Bereich (812) durch durchgehende Schlitze (811), die auf der elektronischen Karte (81) ausgebildet sind, definiert ist.

5. Heizvorrichtung nach einem der vorangehenden Ansprüche, wobei die elektronische Karte (81) in einer zweiten Kammer (22) des Gehäuses (2) angeordnet ist, wobei die zweite Kammer mittels einer Trennwand (10) von der ersten Kammer (21) getrennt ist.

6. Heizvorrichtung nach dem vorangehenden Anspruch, wobei die Wärmeableitung (9) eine Säule (91) umfasst, die in der zweiten Kammer (22) ausgebildet ist und sich von der Trennwand (10) aus erstreckt, wobei die Säule mit der elektronischen Karte (81) in Kontakt steht.

7. Heizvorrichtung nach dem vorangehenden Anspruch, wobei die Säule (91) die elektronische Karte (81) trägt.

8. Heizvorrichtung nach einem der Ansprüche 6 oder 7, ferner umfassend ein Element (92), das die Befestigung der elektronischen Karte (81) an der Säule (91) gewährleistet, wobei das Element (92) durch die Karte hindurch montiert ist.

9. Heizvorrichtung nach einem der Ansprüche 6 bis 8, wobei die Säule (91) und/oder das Befestigungselement (92) die Erdung der elektronischen Karte (81) am Gehäuse (2) gewährleistet.

10. Heizvorrichtung nach einem der Ansprüche 6 bis 9, wobei das Befestigungselement (92) einen Kopf (92a), der in der Nähe des Sensors bzw. der Sensoren positioniert ist, sowie einen Schaft (92b), der in eine Bohrung in der Säule (91) eingreift, aufweist.

## Claims

1. Electric fluid heating device, in particular for a motor vehicle, comprising:
- a housing (2) having a first chamber (21) for circulation of the fluid,
- at least one electric heating element (4) for heating the fluid in said first chamber (21),
- an electronic circuit board (81) for controlling a current circulating in said one or more electric heating element(s) (4),
- at least one thermal sensor,
**characterized in that** said one or more thermal sensors are positioned at the electronic circuit board (81) and thermally connected to said first chamber (21) via a heat sink (9).

2. Heating device according to the preceding claim, wherein the heat sink (9) is positioned close to a fluid outlet opening (25a) of the housing (2).

3. Heating device according to either one of the preceding claims, wherein the electronic circuit board (81) comprises a main zone (813) and a zone (812) thermally insulated from the main zone, said insulated zone accommodating the one or more temperature sensors.

4. Heating device according to the preceding claim, wherein the insulated zone (812) is defined by through-slots (811) formed on the electronic circuit board (81).

5. Heating device according to any one of the preceding claims, wherein the electronic circuit board (81) is arranged in a second chamber (22) of the housing (2), said second chamber being separated from the first chamber (21) by means of a separating wall (10).

6. Heating device according to the preceding claim, wherein the heat sink (9) comprises a column (91) which is formed in the second chamber (22) and extends from the separating wall (10), said column being in contact with the electronic circuit board (81).

7. Heating device according to the preceding claim, wherein the column (91) supports the electronic circuit board (81).

8. Heating device according to either of Claims 6 and 7, further comprising an element (92) for fixing the electronic circuit board (81) to the column (91), said element (92) being mounted through said circuit board.

9. Heating device according to any one of Claims 6 to 8, wherein the column (91) and/or the fixing element (92) earth the electronic circuit board (81) on the housing (2) .

10. Heating device according to any one of Claims 6 to 9, wherein the fixing element (92) has a head (92a) which is positioned close to the one or more sensors, and a shank (92b) which engages in a bore of the column (91).
